(19) Europäisches Patentamt
European Patent Office
Office européen des brevets

(11) Publication number: **0 180 110**
**B1**

(12) **EUROPEAN PATENT SPECIFICATION**

(45) Date of publication of patent specification: **07.09.88**

(51) Int. Cl.$^4$: **C 22 B 30/04**, C 01 G 28/00, C 22 B 3/00

(21) Application number: **85113246.4**

(22) Date of filing: **18.10.85**

(54) **Process for separating arsenic from acid solutions containing it.**

(30) Priority: **25.10.84 IT 8414184**

(43) Date of publication of application:
**07.05.86 Bulletin 86/19**

(45) Publication of the grant of the patent:
**07.09.88 Bulletin 88/36**

(84) Designated Contracting States:
**AT BE DE FR GB SE**

(56) References cited:
**GB-A-1 430 578**
**US-A-4 411 698**
**CHEMICAL ABSTRACTS, vol. 83, no. 8, 25th August 1975, page 426, no. 65196b, Columbus, Ohio, US; & JP - A - 75 17 386 (H. YASUDA) 24-02-1975**
**CHEMICAL ABSTRACTS, vol. 90, 1979, page 122, no. 40936z, Columbus, Ohio, US; & SU - A - 569 259 (VERNADSKII, V.I. INSTITUTE OF GEOCHEMISTRY AND ANALYTICAL CHEMISTRY) 15-10-1978**

(73) Proprietor: **CONSIGLIO NAZIONALE DELLE RICERCHE**
**Piazzale Aldo Moro, 7**
**I-00198 Roma (IT)**

(72) Inventor: **Baradel, Agostino**
**Via Ripalta, 6/A**
**I-20097 S. Donato Milanese Milano (IT)**
Inventor: **Guerriero, Renato**
**Via Terraglio, 71**
**I-30170 Mestre Venezia (IT)**
Inventor: **Veronese, Giuseppe**
**Riviera Albertino Mussato, 39**
**I-35100 Padova (IT)**

(74) Representative: **Piovesana, Paolo**
**Corso del Popolo, 70**
**I-30172 Venezia-Mestre (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 180 110 B1**

Courier Press, Leamington Spa, England.

**Description**

The present invention relates to a process for separating arsenic from acid solutions containing it. More particularly the invention relates to a process for separating arsenic from sulfuric solutions of copper and other ions.

Almost all commercial copper is produced by electrolytic refining of a raw material having 99.5% of copper and containing arsenic, together with many other impurities. Said raw material (the so-called blister), suitably smelted and recast into plates, forms the anode of an electrolytic cell, the cathode of which can be a copper plate or, in the most modern plants, a stainless steel or titanium plate.

The electrolyte is a solution of cupric sulfate, containing a lot of free sulfuric acid.

When electric current is applied, copper dissolves from the anode and contemporary deposits at the cathode. Among the impurities of the anode, some of them are insoluble and form the so called "anode mud", other impurities (elements less noble than copper) dissolve electrolitically. One of these is arsenic, which, therefore builds up in the electrolyte, leading to the need of removing it in order to avoid copper contamination.

There are also other metallurgical process in which the control and the removal of arsenic are very important. For instance this problem exists in the case of the recovery of copper by electrolysis with insoluble anodes from residuals, i.e. the copper scums coming from purification stages in the primary metallurgy lead.

In all cases the input-output equilibrium of arsenic (and of the other impurities) must be controlled; a well known technique is to bleed part of the copper electrolyte which is sent to multi-stage electrowinning cells in which arsenic is eliminated as a copper-arsenic alloy.

The electrolysis of a solution poor in copper and rich in arsenic causes the hazard of generation of arsine, a very toxic gas, and therefore it requires particular facilities and precautions.

Furthermore the recycling of the alloy sometimes presents technical and economic problems.

Therefore it is particularly interesting to have an easier process for the selective removal of arsenic from the copper electrolyte or anyhow from strongly acid solutions.

Methods consisting in the extraction of arsenic from copper electrolyte with suitable organic solutions are already known, having the tributylphosphate as main active component. From such solutions arsenic can be extracted with water or acid or alkaline aqueous solutions, and separated by precipitation as sulfide, using hydrogen sulfide or alkaline sulfides, or as arsenic trioxide using sulfur dioxide or sulfites.

DE—OS 2.603.874 substantially discloses the separation of arsenic from copper in acid solutions with sulfuric acid, by extraction with hydrocarbon solutions containing 50—75% of tributylphosphate and 5% or less of a high-boiling alcohol, the function of which is expressly devoted to prevent the formation of a third phase when the concentration of arsenic in the organic phase increases.

DE—OS 2.615.638 discloses the use of a trialkylic, triarylic or triarylalkylic phosphate, preferably tributylphosphate, diluted with a hydrocarbon and containing smaller quantities of isodecyl alcohol having the function of emulsion inhibitor.

GB—PS 1.551.023 discloses the use of a hydrocarbon solution containing 40—75% of tributylphosphate and up to 15% of a quaternary ammonium salt, preferably methyltricaprylammonium chloride (Aliquat 336) or a mixture of methyltri($C_8$—$C_{10}$)alkylammonium chlorides (Adogen 464).

In all the three cited specification, tributylphosphate, a quite toxic substance, is used in considerable quantities; furthermore in GB—PS 1.551.023 the addition of a quaternary ammonium salt causes a further increase in toxicity of the extracting organic mixture.

Furthermore in the cited specifications the affinity for arsenic is moderate, and this requires many extraction stages with a high ratio organic/water.

The capability of polyphenols, having two hydroxyls in vicinal positions, to form chelate complexes with arsenious acid in strongly mineral-acid solutions is well known (T. H. Larkins Jr.; C. E. Martin; M. M. Jones: "Inorganic Chemistry *2*(3), 1963, pages 554—8" and R. Johanson: "J. Applied Chemistry *19*(7), 1969, pages 201—8").

The complexes with pyrocatechol and with pyrogallic acid, formed by the reaction of a molecule of arsenic or arsenious acid respectively with three or two molecules of polyphenol, were carefully examined (Kiyaki Kuwada; Shoji Motomizu; Kyoji Tōei: "Hunseki Kagaku *26*, 1977, pages 609—14 and K. Kratzer; J. Stary: "Radiochem. Radioanal. Letters *40*/1, 1979, pages 61—8".

SU—PS 765.402 discloses the separation of arsenic from acid solutions using a resin obtained through polycondensation of pyrocatechol and formaldehyde. Indeed such a kind of resin presents a poor affinity for arsenic due to the necessity of arranging two or even three phenolic groups so as to allow the bonding with the arsenic according to the geometric configuration that the complex must acquire: such a possibility is prevented by the threedimensional structure of the resin so as to reduce the affinity of the resin for arsenic of one order of magnitude. This condition is common for all the cases in which, to bind the metal, more than one chelating molecule is necessary; as an alternative to this solution, the liquid/liquid extraction remains, in which organic chelating agents, practically water-insoluble are used.

The aim of the invention is to separate arsenic from copper electrolyte or, in general, from acid solution containing other metal ions, by a simple and easy way, with high efficiency and without using substances having high toxicity.

Such an aim is achieved, according to the invention, by a process, for separating arsenic from acid solutions containing it according to which the acid solution containing arsenic is treated with an organic solution of an organic extractant of arsenic, and the so obtained organic arsenical solution is treated with a countersolvent stripping the arsenic from this solution, characterized in that the extractant is a derivative of polyhydroxy benzene having the general formula

$$C_6R_n(OH)_mH_{6-(m+n)}$$

in which

$C_6$ is the group of six atoms of a benzene nucleus,

R is an alkylic, alkylenic, cycloalkylenic or arylalkylic radical bond to the benzene nucleus,

OH is a hydroxyl group bound to the benzene nucleus,

n is a whole number included from 1 to 4,

m is a whole number included from 2 to 4.

In order to get a quite low solubility in water and a good solubility in hydrocarbons, the radical or the radicals R, bounded to the benzene nucleus can have, all together, at least four atoms of carbon, preferably more than five.

Always in order to get a quite low solubility in water and a good solubility in hydrocarbons the extractant can have m not greater than 3 and preferably equal to 2.

Among the compounds that can be used in the process according to the invention, the mono- and di-alkyl-derivatives of the following compounds are preferred: (1,2) - dihydroxybenzene (pyrocatechol); (1,2,3) - trihydroxybenzene (pyrogallic acid); (1,2,4) - trihydroxybenzene (hydroxyhydroquinone); (1,2,3,4) - tetrahydroxybenzene; (1,2,3,5) - tetrahydroxybenzene; (1,2,4,5) - tetrahydroxybenzene.

Particularly suitable are the derivatives of the pyrocatechol and the pyrogallic acid, i.e. hexylpyrocatechol, dihexylpyrocatechol, octylpyrocatechol, dioctylpyrocatechol, dodecylpyrocatechol, pentadecylpyrocatechol, octadecylpyrocatechol, nonylpyrogallic acid, dodecylpyrogallic acid and hexadecyl pyrogallic acid.

All these compounds are easily and cheaply obtained by a reaction between a polyphenol and an olefin in presence of an acid catalyst according to a well known technology used, for example, to obtain mono or di-terbutyl derivatives of the phenol and of the pyrocatechol universally used as antioxidants.

The compounds pertinent to the present invention are very viscous solids or liquids and therefore they must be used in solutions of suitable organic diluents.

The diluents that can be used for this purpose can be aliphatic, cycloaliphatic, aromatic hydrocarbons and/or aliphatic, cycloaliphatic and arylaliphatic alcohols. Such diluents can also consist of mixtures of compounds included in the above mentioned classes in all the proportions and compositions, taking into account the factors well known to the skilled men.

The concentration of the active compound in the organic phase can vary in a very wide range and it is limited only by the solubility in the selected diluent at the operating temperature; preferably such a concentration varies from 0.1-molar to 1-molar.

The ratio between the organic phase and the aqueous phase varies from 0.02 to 10; preferably from 0.1 to 4.

The stripping of arsenic from the organic phase can be made without any difficulty by using alkaline solutions, for example sodium hydroxide solutions from 0.1N to 6N, preferably from 1N to 3N.

The following examples will further clarify the invention.

Example 1

100 ml of an aqueous solution containing sulfuric acid (200 g/l), copper (45 g/l) and arsenic (5.9 g/l) have been poured into a 250 ml separatory funnel. Then a 0.3M solution of n-hexylpyrocatechol (100 ml), (a mixture of the two position isomers obtained from the reaction of 1-hexene with excess of pyrocatechol), has been added into Escaid 100 (Registered Trade Mark); the mixture has been strongly stirred for 10′ and made then to settle for 30′.

After the separation of the phases, the aqueous phase contained 0.71 g/l of arsenic (extraction of 88%).

Example 2

Acting in the same way as the previous example, 100 ml of a copper solution was contacted with a 0.3M solution of dioctylpyrocatechol (100 ml) in Escaid 100, obtained from the reaction of an excess of 1-octene with pyrocatechol.

After the separation of the phases, the aqueous phase contained 0.54 g/l of arsenic (extraction of 91%).

This example shows how the increase in the molecular weight of the active compound, which gives it a lower solubility in water, doesn't compromise the extraction yield.

Example 3

Same as in Example 2 except that five extractions were made interrupting agitation at different times.

The results listed in the following Table I, show the rapidity of extraction and the stabilization of the result reached after two minutes only.

TABLE I

| Time (minutes) | 1 | 2 | 5 | 10 | 15 |
|---|---|---|---|---|---|
| Extraction (%) | 86.4 | 91.2 | 91.0 | 91.0 | 90.9 |

Example 4

Same as in Example 2, making five extractions in which the volumetric ratio between organic phase and aqueous phase (O/A) has been allowed to vary.

The results listed in the following Table II show that even with a low organic/aqueous phase ratio it is possible to obtain a high percentage of arsenic extraction, making it unnecessary to use high quantities of organic solvent.

TABLE II

| O/A | 0.5 | 0.75 | 1.0 | 1.5 | 2.0 | 3.0 |
|---|---|---|---|---|---|---|
| Extraction % | 76.8 | 88.8 | 91.0 | 94.6 | 95.8 | 96.1 |

Example 5

25 ml of the organic solution used in Example 2 (containing 5.36 g/l of arsenic) and 25 ml of aqueous solution of 2N sodium hydroxide have been poured into a 100 ml separatory funnel.

The two phases were strongly stirred for 10′ and then made to settle.

After separation of the phases, in the aqueous phase there were 5.0 g/l of arsenic (93%). This shows the possibility of effectively stripping arsenic from the organic phase.

**Claims**

1. A process, for separating arsenic from said solutions containing it according to which the said solution containing arsenic is treated with an organic solution of an organic extractant of arsenic, and the so obtained organic arsenical solution is treated with a countersolvent stripping the arsenic from this solution, characterized in that the extractant is a derivative of polyhydroxy benzene having the general formula

$$C_6R_n(OH)_mH_{6-(m+n)} \quad (1)$$

in which

$C_6$ is the group of six atoms of a benzene nucleus,

R is an alkylic, alkylenic, cycloalkylenic or arylalkylic radical bond to the benzene nucleus,

OH is a hydroxyl group bound to the benzene nucleus,

n is a whole number included from 1 to 4,

m is a whole number included from 2 to 4.

2. Process according to claim 1 characterized in that the radical (or radicals) R, of the compound (1), bounded to the benzene nucleus have, all together, at least four atoms of carbon, preferably more than five.

3. Process according to claim 1 characterized in that in the compound (1) m is not greater than 3, for instance is equal to 2.

4. Process according to claim 1 characterized in that the compound (1) comprises the mono- and di-alkylderivatives of the following compounds:

— (1,2)-dihydroxybenzene (pyrocatechol);

— (1,2,3)-trihydroxybenzene, (pyrogallic acid);

— (1,2,4)-trihydroxybenzene (hydroxyhydroquinone);

— (1,2,3,4)-tetrahydroxybenzene;

— (1,2,3,5)-tetrahydroxybenzene;

— (1,2,4,5)-tetrahydroxybenzene.

5. Process according to claim 4 characterized in that the compound (1) is included in the group comprising the hexylpyrocatechol, the dihexylpyrocatechol, the octylpyrocatechol, the dioctylpyrocatechol, the dodecylpyrocatechol, the pentadecylpyrocatechol, the octadecylpyrocatechol, the nonylpyrogallic acid, the dodecylpyrogallic acid and the hexadecyl pyrogallic acid.

**Patentansprüche**

1. Verfahren zur Abtrennung des Arsen von saueren Lösungen, die es enthalten, wonach die saueren Arsen enthaltenene Lösung durch eine organische Lösung eines organischen Arsenextrahierungsmittels reagieren gelassen wird, und die so erhaltene organische Arsenlösung durch ein Gegenlösungsmittel,

welches das Arsen aus dieser Lösung wiederentzieht, reagieren gelassen wird, dadurch gekennzeichnet, daß das Arsenextrahierungsmittel ein Polyhydroxybenzolderivat ist, mit allgemeiner Formel

$$C_6R_n(OH)_m\, H_{6-(m+n)} \qquad (1)$$

worin

$C_6$ die Gruppe von sechs Atome eines Benzolkernes ist,

R ein alkylisches, alkylenisches, cycloalkylisches or arylalkylisches mit dem Benzolkern gebundenes Radikal ist,

OH eine hydroxylische mit dem Benzolkern gebundene Gruppe ist,

n ein von 1 bis 4 einschließlicher Ganze ist,

m ein von 2 bis 4 einschließlicher Ganze ist.

2. Verfahren nach Anspruch 1, dadurch gekennzeichnet, daß das Radikal (die Radikale) R der Verbindung (1), das mit dem Benzolkern gebunden ist, mindestens vier Kohlenstoffatome alle inbegriffen besitzen, vorzugsweise mehr als fünf.

3. Verfahren nach Anspruch 1 dadurch gekennzeichnet, daß die Verbindung (1) nicht größer als 3, z.B. gleich wie 2, ist.

4. Verfahren nach Anspruch 1, dadurch gekennzeichnet, daß die Verbindung (1) die Mono- und Dialkylderivate der folgenden Verbindungen umfaßt:

— (1,2)-Dihydroxybenzol (Pyrocatechol)
— (1,2,3)-Trihydroxybenzol (Pyrogallsäure)
— (1,2,4)-Trihydroxybenzol (Hydroxyhydroquinone)
— (1,2,3,4)-Tetrahydroxybenzol,
— (1,2,3,5)-Tetrahydroxybenzol,
— (1,2,4,5)-Tetrahydroxybenzol.

5. Verfahren nach Anspruch 4, dadurch gekennzeichnet, daß die Verbindung (1) in der Gruppe das Hexylpyrocatechol, das Dihexylpyrocatechol, das Octylpyrocatechol, das Dioctylpyrocatechol, das Dodecylpyrocatechol, das Pentadecylpyrocatechol, das Octadecylpyrocatechol, die Nonylpyrogallsäure, die Dodecylpyrogallsäure, die Nonylpyrogallsäure, die Dodecylpyrogallsäure und die Hexadecylpyrogallsäure umfäßt, umgefaßen ist.

**Revendications**

1. Procédé pour séparer l'arsenic des solutions acides qui le contiennent, selon lequel la solution acide contenant l'arsenic est traitée avec une solution organique d'un extraisant organique, et la solution organique arsénicale ainsi obtenue est traités avec un contre-solvant qui tire de nouveau l'arsenic de cette solution, caractérisé en ce que l'extrisant est une dérivée de polyhydroxybenzéne ayant la formula générale

$$C_6R_n(OH)_m\, H_{6-(m+n)} \qquad (1)$$

où

C est le group de six atomes d'un noyau benzénique,

R est un radical alchilique, alchilenique, cycloalchilique ou arylalchilique lié au noyau benzénique,

OH est un group oxhydrilique lié au noyau benzénique,

n est un nombre entier compris entre 1 et 4,

m est un nombre entier compris entre 1 et 4.

2. Procédé suivant la revendication 1, caractérisé en ce que le radical (ou les radicales) R, du composé (1), lié au noyau benzénique, ont, dans l'ensemble au moins quatre atomes de carbone, de préférence plus de cinq.

3. Procédé suivant la revendication 1, caractérisé en ce que dans le composé 1 m n'est pas supérieur à 3, par example il est égual à deux.

4. Procédé suivant la revendication 1 caractérisé en ce que le composé (1) comprend les mono-et-dialkyldérivés (7) des composés suivants:

— (1,2)-dihydroxybenzène (pyrocatécol)
— (1,2,3)-trihydroxybenzène (pyrogallique acide)
— (1,2,4)-trihydroxybenzène (hydroxy hydroquinone)
— (1,2,3,4)-tétrahydroxybenzène
— (1,2,3,5)-tétrahydroxybenzène
— (1,2,4,5)-tétrahydroxybenzène.

5. Procédé suivant la revendication 4, caractérisé en ce que le composé 1 est compris dans le group comprénant le hexylpyrocatécol, le dihexylpyrocatécol, l'octylpyrocatécol, le dioctylpyrocatécol, le dodecylpyrocatécol, le pentadecylpyrocatécol, l'octadecylpyrocatécol, le monylpirogallique acide, le dodecylpyrogallique acide et le hexadecylpyrogallique acide.